## Europäisches Patentamt
## European Patent Office
## Office européen des brevets

(19)

(11) Veröffentlichungsnummer: **0 276 628**
**B1**

(12) # EUROPÄISCHE PATENTSCHRIFT

(45) Veröffentlichungstag der Patentschrift:
28.11.90

(51) Int. Cl.⁵: **B65B 9/20**, B65B 51/32

(21) Anmeldenummer: **87810576.6**

(22) Anmeldetag: **07.10.87**

(54) **Schlauchbeutelmaschine mit Strippereinrichtung.**

(30) Priorität: **21.01.87 CH 211/87**

(43) Veröffentlichungstag der Anmeldung:
**03.08.88 Patentblatt 88/31**

(45) Bekanntmachung des Hinweises auf die Patenterteilung:
**28.11.90 Patentblatt 90/48**

(84) Benannte Vertragsstaaten:
**AT BE CH DE ES FR GB IT LI NL SE**

(56) Entgegenhaltungen:
**EP-A- 0 165 819**
**DE-A- 2 659 695**
**GB-A- 1 065 144**
**GB-A- 2 067 129**

(73) Patentinhaber: **ILAPAK Research & Development S.A.,
Via Grancia Zone Industriale, CH-6911 Grancia
Lugano(CH)**

(72) Erfinder: **Klinkel, Wolfgang, Sala Capriasca,
CH-6951 Bigorio(CH)**
Erfinder: **Vits, Dieter, Buchsbaumstrasse 11,
D-4040 Neuss 21(DE)**

(74) Vertreter: **Bosshard, Ernst, Schulhausstrasse 12,
CH-8002 Zürich(CH)**

**Beschreibung**

Die Erfindung bezieht sich eine eine Schlauch-beutelmaschine mit Strippereinrichtung zum Kompri-mieren des Beutelinhaltes, mit einer Längssiegeleinrichtung und mit zwei sich gegenüberliegenden Quersiegelbacken zur Erzeugung von Beutelquernähten.

Bei Schlauchbeutelmaschinen wird das abzupackende und abgewogene Einfüllgut durch ein vertikales Füllrohr in einen flexiblen Kunststoff-Schlauch eingefüllt, der in Beutellänge durch Quernähte versiegelt wird. Der Einfüllvorgang erfolgt zwischen zwei aufeinanderfolgenden Quersiegelvorgängen.

Bei leichtem, sperrigem Einfüllgut, beispielsweise Kartoffelchips, oder andern fülligen Lebensmitteln, besteht ein Problem darin, dass die Schlauchbeutel sich nur locker füllen lassen, so dass bei gegebenem Gewicht des Einfüllgutes ein unnötig grosser Beutel erforderlich ist. Zudem besteht die Gefahr, dass sich das Einfüllgut bis in den Bereich der QuerSiegelnaht erstreckt, was die Bildung einer dichten Quernaht behindert.

Es ist zwar bereits eine Strippereinrichtung bei Schlauchbeutelmaschinen bekannt (US-PS 4,391,081) bei der eine Komprimierung in Vertikalrichtung an den in der Höhe nicht verstellbaren Schweissbacken vorbei bewegt werden müssen, ist eine komplizierte mechanische Konstruktion erforderlich, mit einer Vielzahl von Hebeln und Gelenken.

Mit der Erfindung soll die Aufgabe gelöst werden, eine Strippereinrichtung zu schaffen um den Beutelinhalt zu komprimieren, die in ihrem Aufbau extrem einfach ist, eine kurze Taktzeit ermöglicht und sich auch für Schlauchbeutelmaschinen eignet, bei denen ein kontinuierlicher Vorschub des Schlauches während den Siegeloperationen erfolgt.

Diese Aufgabe wird durch die Erfindung dadurch gelöst, dass die Stripperbacken unterhalb der Quersiegelbacken angeordnet und mit diesen bewe-gungsverbunden sind, die Stripperbacken gegen-über den Quersiegelbacken in Richtung auf den Schlauch hin vorstehen und je durch eine Feder belastet sind, Antriebsmittel vorhanden sind, welchen den Quersiegelbacken samt den Stripperbacken ei-ne Vertikalbewegung in Schlauchlängsrichtung er-teilen und Steuermittel vorhanden sind, welche bewirken, dass die Stripperbacken in einer ersten Bewegungsphase den Schlauch seitlich zusammendrücken und in diesem Zustand eine Stripperbewegung relativ zum Beutel nach unten ausführen, und in einer anschliessenden zweiten Bewegungsphase die Quersiegelbacken zur Erzeugung einer Quernaht schliessen.

Durch diese Ausbildung und die Verschiebung der Stripperbacken mit den Quersiegelbacken ergibt sich eine besonders einfache Bewegungssteuerung.

In der Zeichnung sind Ausführungsbeispiele des Erfindungsgegenstandes dargestellt und werden nachfolgend näher erläutert. Es zeigen:

Fig. 1 eine schematische Gesamtansicht einer Schlauchbeutelmaschine mit Strippereinrichtung

Fig. 2 eine schematische Darstellung der Quersiegelbacken und Stripperbacken in der offenen Position, zwischen denen sich ein unten geschlossener, mit Einfüllgut gefüllter Schlauch befindet

Fig. 3 die Darstellung gemäss Fig. 2 jedoch bei geschlossenen Stripperbacken, bevor die Stripperbewegung ausgeführt wird

Fig. 4 die Darstellung nach Fig. 3 jedoch nach Durchführung der Stripperbewegung und Erzeugung der Quernaht zur Bildung eines geschlossenen Schlauchbeutels

Fig. 5 eine konstruktive Ausbildung einer Stripperbacke, teilweise im Schnitt

Fig. 6 einen Schnitt durch die Stripperbacke nach der Linie VI-VI in Fig. 5.

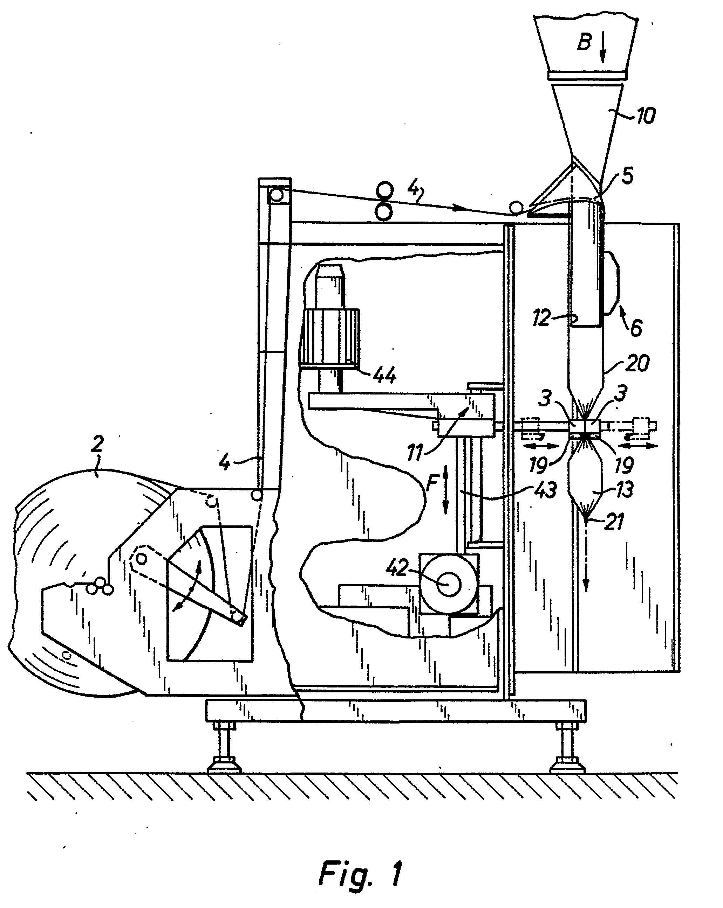

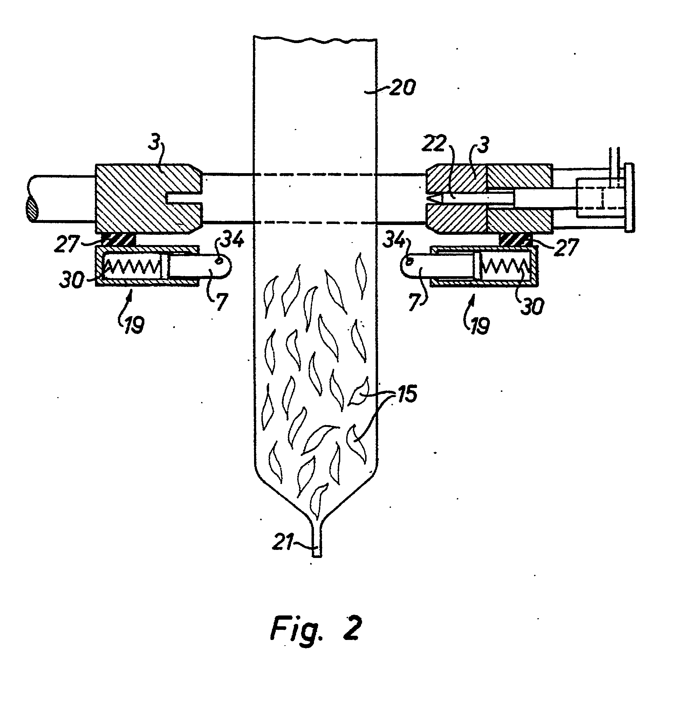

Bei der Schlauchbeutelmaschine gemäss Fig. 1 wird in an sich bekannter Weise eine flache, flexible, von einer Rolle 2 abgezogene Kunststoff-Folie 4 über eine Formschulter 5 gezogen und ein zylindrischer Schlauch 20 um ein Einfüllrohr 12 herum gebildet. Dieser Schlauch 20 wird an den sich überlap-penden Längsrändern durch eine Längsschweiss-backe 6 verschweisst. Der Schlauch 20 wird durch Abzugsrollen nach den Formschultern 5 kontinuierlich in Vertikalrichtung nach unten gezogen. Dieser Schlauch 20 gelangt weiter unten zwischen ein Paar vorerst geöffneter Quersiegelbacken 3, wie dies aus Fig. 2 hervorgeht. Das Einfüllgut 15 gelangt in einzelnen abgewogenen Portionen über einen Trichter 10 in das vom Schlauch 20 umgebene vertikale Einfüllrohr 12 und weiter in Richtung des Pfeiles B in das Innere des Schlauches 20.

Mit den Quersiegelbacken 3 werden in der vorbestimmten Beutellänge am Schlauch 20 Quernähte angebracht und dadurch der Schlauch oben und unten zu Beuteln 13 verschlossen. Eine derartige Schlauchbeutelmaschine ist mit ihren Einzelheiten und ihrer Funktionsweise in der Europ. Patentanmel dung Nr. 87810318 beschrieben. Das Anbringen der Längsnaht und der Quernähte erfolgt während der kontinuierlichen Abwärtsbewegung des Schlauches.

Um den Beutelinhalt zu komprimieren sind zusätzlich Stripperorgane 19 vorhanden.

Unterhalb den beiden Quersiegelbacken 3 befinden sich zwei Stripperbacken 7, die je mit den Quersiegelbacken 3 über eine Zwischenlage 27 mechanische starr verbunden sind. Diese Stripperbacken 7 sind je durch eine in einem Gehäuse 24 angeordnete Feder 30 belastet. Ihr gegenseitiger horizontaler Abstand ist geringer als der gegenseitige Abstand der beiden Quersiegelbacken 3. Die beiden Stripperbacken 7 machen somit die horizontalen und vertikalen Bewegungen der Quersiegelbacken 3 mit.

Bei geöffneten Quersiegelbacken 3 gemäss Fig. 2 befindet sich der mit abgewogenem Einfüllgut 15 gefüllte, unten durch eine Bodennaht 21 verschlossene Schlauch 20 zwischen den beiden Stripperbacken 7, die auf diametral gegenüberliegenden Seiten des zylindrischen Schlauches 20 liegen.

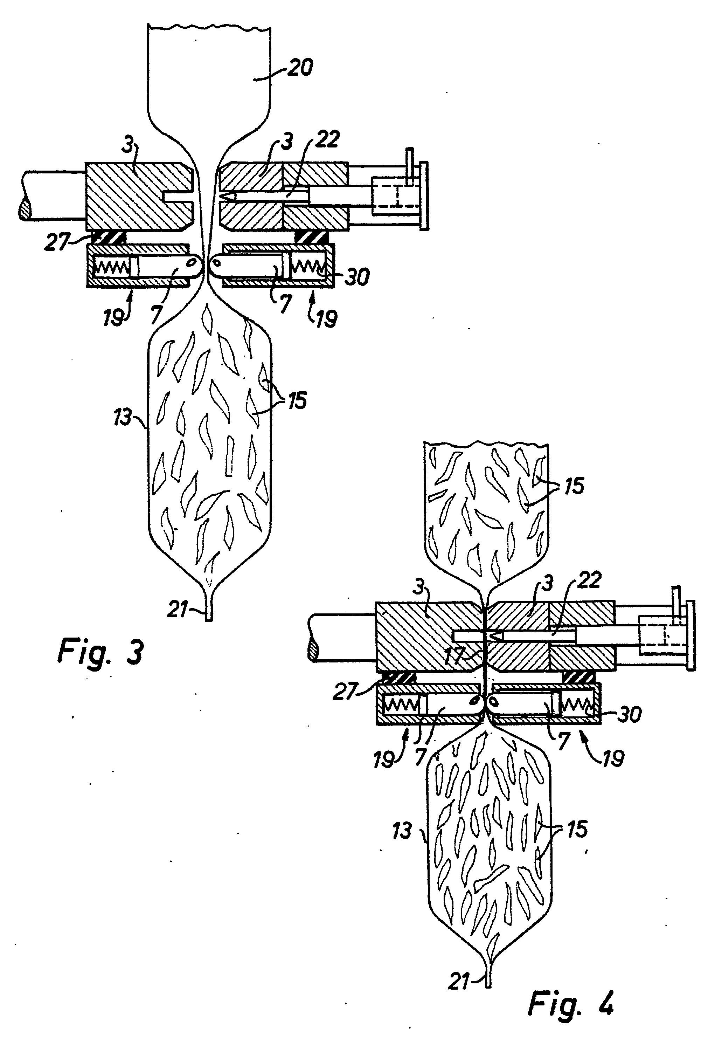

Zu Beginn des Strippervorganges werden die beiden Quersiegelbacken 3 durch Betätigung einer Kurvenscheibe, eines Kurbelarmes oder durch hydraulische oder pneumatische Mittel gegeneinander bewegt. Die beiden Quersiegelbacken 3 nehmen dabei - gemäss Fig. 3 - eine Lage mit gegenseitigem Abstand ein, sodass kein Siegelprozess stattfindet. Die beiden sich gegenüberliegenden, gegenüber den Quersiegelbacken vorstehenden Stripperbacken 7 drücken den flexiblen Schlauch 20 durch Druck der Federn 30 zusammen. In dieser gegen den Schlauch 20 anliegenden Position der Stripperbacken 7 erfolgt eine Abwärtsbewegung der Quersiegelbacken 3 samt den Stripperbacken 7 entlang einer vorbestimmten Strecke und zwar mit einer Abwärtsgeschwindigkeit die grösser ist als die Geschwindigkeit, mit welcher der Schlauch 20 kontinuierlich abwärts bewegt wird. Dadurch wird das Einfüllgut 15 im Innern des Schlauches 20 komprimiert, wobei die Luft im Beutel zwischen den nur leicht angepressten Stripperbacken 7 nach oben entweichen kann.

Hernach werden die Quersiegelbacken 3 ganz geschlossen und dabei die Quernaht am Beutel 13 erzeugt, wie dies in Fig.4 dargestellt ist. Während dieses Siegelvorganges liegen die beiden Stripperbacken 7 gegen den Schlauch an und werden beim Schliessen der Quersiegelbacken 3 entgegen dem Federdruck weiter in das Gehäuse 24 hinein geschoben. Sodann wird das Trennmesser 22 betätigt und der gefüllte, oben und unten verschlossene Beutel 13 abgetrennt. Der Quersiegelvorgang erfolgt während der kontinuierlichen Abwärtsbewegung des Schlauches 20, wobei die Quersiegelbacken 3 während des Siegelvorganges mit der gleichen Geschwindigkeit wie der Schlauch 20 in Abwärtsrichtung bewegt werden. Da gleichzeitig mit der Bodennaht 21 eines untern Beutels die Kopfnaht eines darüberliegenden nächsten Beutels 13 erzeugt wird, kann sofort mit der Zufuhr von Einfüllgut 15 in den obern Beutel begonnen werden.

Nach dem Abtrennen des gefüllten und an beiden Enden verschlossenen Beutels durch ein Trennmesser 22 werden die Quersiegelbacken 3 und damit auch die Stripperbacken 7 geöffnet und anschliessend mit erhöter Geschwindigkeit nach oben bewegt, sodass sie hernach wieder die in Fig. 2 dargestellte Ausgangslage für einen nächsten Zyklus annehmen.

Die unterschiedliche Geschwindigkeit in Vertikalrichtung der ganzen Baugruppe 11 samt Quersiegelbacken 3 und Stripperbacken 7 erfolgt durch Steuerung der Drehzahl eines Elektromotores 42 mit Spindel 43 in Richtung des Doppelpfeiles F durch eine entsprechend programmierte elektronische Steuereinrichtung. Die horizontale Bewegung des Quersiegelbacken 3 und damit der Stripperbacken 7 erfolgt durch Steuerung eines weitern Motors 44 über eine Kurvenscheibe oder einen Kurbelarm.

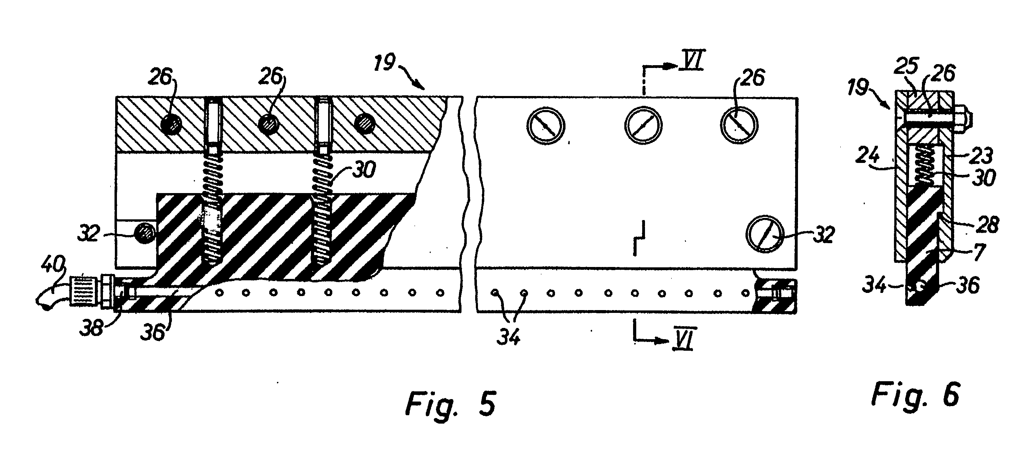

Aus Fig. 5 und 6 ist eine Realisierung mit konstruktiven Einzelheiten eines Stripperorganes 19 dargestellt. Das Gehäuse 24 enthält zwei Deckplatten 23 zwischen denen sich eine den gegenseitigen Abstand bestimmende Leiste 25 befindet, wobei das Ganze durch Schrauben 26 zusammengehalten wird. Das Gehäuse 24 kann entweder direkt mit der Quersiegelbacke 3 starr oder über eine wärmeisolierende Zwischenlage 27 verbunden werden. Die zwischen den Deckplatten 23 angeordnete, bewegliche Stripperbacke 7 ist mit einer Längsschulter 28 versehen, welche verhindert, dass sie unter dem Druck der Schraubenfedern 30 aus dem Gehäuse 24 heraus gestossen wird. Seitlich wird die Stripperbacke 7 durch Stifte 32 oder Rollen geführt, sodass sie nicht verkanten kann. Die Stripperbacke 7 besteht vorzugsweise aus einem Kunststoff.

Zum Kühlen der sich oberhalb der Stripperbacken 7 befindlichen Kopfnaht 17 des Beutels 13 sind in der Längsrichtung der Stripperbacken 7 mehrere Luftauslassdüsen 34 vorhanden, die mit einer gemeinsamen, an einem Ende verschlossenen Längsbohrung 36 in Verbindung stehen. Ueber einen Schlauchnippel 38 ist ein Schlauch 40 angeschlossen, der mit einer Druckluftquelle in Verbindung steht.

Die Luftauslassdüsen 34 kühlen die Kopfnaht 17, sobald sich die Quersiegelbacken 3 öffnen.

Unter "Siegelung" und "Siegelbacken" soll auch eine Schweissung oder Schweisswerkzeuge für die Schlauchfolie verstanden werden.

### Patentansprüche

1. Schlauchbeutelmaschine mit Strippereinrichtung zum Komprimieren des Beutelinhaltes, mit einer Längssiegeleinrichtung 6 und mit zwei sich gegenüberliegenden Quersiegelbacken (3) zur Erzeugung von Beutelquernähten (17, 21), mit Stripperbacken (7) die unterhalb der Quersiegelbacken (3) angeordnet und mit diesen bewegungsverbunden sind, wobei die Stripperbacken (7) gegenüber den Quersiegelbacken (3) in Richtung auf den Schlauch (20) hin vorstehen und je durch eine Feder (30) belastet sind, Antriebsmittel (42) vorhanden sind, welche den Quersiegelbacken (3) samt den Stripperbacken (7) eine Vertikalbewegung in Schlauchlängsrichtung (F) erteilen und Steuermittel vorhanden sind, welche bewirken, dass die Stripperbacken (7) in einer ersten Bewegungsphase den Schlauch (20) seitlich zusammendrücken und in diesem Zustand eine Stripperbewegung relativ zum Beutel (13) nach unten ausführen, und in einer anschliessenden zweiten Bewegungsphase die Quersiegelbacken (3) zur Erzeugung einer Quernaht (17) schliessen, dadurch gekennzeichnet, dass Antriebsorgane vorhanden sind, die den Schlauch (20) während der Stripperbewegung und während der Siegelung kontinuierlich antreiben, dass Steuermittel für einen ersten, mit den Quersiegel- und Stripperbacken (3, 7) zusammenwirkenden Motor (42) vorhanden sind, welche die Quersiegel- und Stripperbacken (3, 7) in der ersten Bewegungsphase mit einer gegenüber der Sclauchgeschwindigkeit erhöhten Geschwindigkeit geradlinig Abwärtsrichtung antreibt und in der zweiten Bewegungsphase mit einer der Sclauchgeschwindigkeit entsprechenden, geradlinigen Abwärtsgeschwindigkeit antreibt und sodann mit erhöter Geschwindigkeit in die Ausgangslage zurück bewegt und das für das Oeffnen und Schliessen der Querspiegel- und Stripperbacken (3, 7) ein zweiter Motor (44) vorhanden ist.

2. Schlauchbeutelmaschine nach Anspruch 1, dadurch gekennzeichnet, dass die Stripperbacken (7) je mit mehreren, nach oben gegen die Quersiegelbacken (3) gerichteten Luftauslassdüsen (34) versehen sind, die von einem gemeinsamen an eine Druckluftquelle angeschlossenen Längsluftkanal (36) ausgehen.

3. Verfahren zum Betrieb einer Schlauchbeutelmaschine, bei der der Schlauch (20) mit einer ersten Geschwindigkeit kontinuierlich abwärts bewegt wird, nach dem Füllen des Beutels (13) mit Produkten zwei gegeneinander verschiebbare, mit Quersiegelbacken (3) bewegungsverbundene Stripperbacken (7) geschlossen werden, die geschlossenen Stripperbacken (7) zur Ausführung einer Stripperbewegung mit einer gegenüber der ersten erhöhten Geschwindigkeit in Schlauchbewegungs-Richtung bewegt werden und anschliessend während des kontinuierlichen Vorschubes des Schlauches (20) die Quersiegelung des Beutels (13) erfolgt und sodann der versiegelte Beutel abgetrennt wird, dadurch gekennzeichnet, dass die Quersiegel- und Stripperbacken (3, 7) während der Stripperbewegung in Schlauchvorschubrichtung durch einen ersten Antrieb geradlinig bewegt werden und hernach die Quersiegel-und Stripperbacken (3, 7) mit einer gegenüber der ersten verminderten Geschwindigkeit abwärts bewegt und gleichzeitig die Quersiegelbacken (3) zur Bildung einer Quernaht (17) durch einen zweiten Antrieb (44) geschlossen werden und nach dem Abtrennen des versiegelten Beutels (13) die Stripperbacken (3) geöffnet und mit erhöhter Geschwindigkeit in die Ausgangslage zurück bewegt werden..

## Revendications

1. Machine pour fabriquer des sachets tubulaires, comprenant un dispositif de tassement destiné à comprimer le contenu du sachet, un dispositif de soudure longitudinale (6) et deux mâchoires de soudure transversale (3), opposées et destinées à obtenir des cordons de soudure transversaux du sachet (17, 21), des mâchoires de tassement (7), qui sont montées en-dessous des mâchoires de soudure transversale (3) et qui en sont solidaires en déplacement, les mâchoires de tassement (7) étant en saillie par rapport aux mâchoires de soudure transversale (3) en direction du sachet tubulaire (20) et étant respectivement soumises à l'action d'un ressort (30), et il est prévu des moyens d'entraînement (42) qui impartissent aux mâchoires de soudure transversale (3) ainsi qu'aux mâchoires de tassement (7) un mouvement descendant dans la direction longitudinale (F) du tube, et des moyens de commande qui font que les mâchoires de tassement (7) compriment latéralement le tube (20) dans une première phase de déplacement et exécutent dans cet état un mouvement de tassement vers le bas par rapport au sachet (13) et que, dans une seconde phase ultérieure de déplacement, les mâchoires de soudure transversale (3) se ferment pour produire un cordon de soudure transversal (17), caractérisée en ce qu'il est prévu des organes d'entraînement qui entraînent continuellement le tube (20, pendant le mouvement de tassement et pendant la soudure, en ce qu'il est prévu des moyens de commande d'un premier moteur (42) qui coopère avec les mâchoires de soudure transversale (3) et avec les mâchoires de tassement (7), lesquels, dans la première phase de déplacement, entraînent rectilignement dans le sens descendant les mâchoires de soudure transversale et celles de tassement à une vitesse plus grande que celle du tube et, dans la seconde phase de déplacement, les entraînent à une vitesse rectiligne descendante qui correspond à la vitesse du tube et les ramène immédiatement à grande vitesse à la position de départ, et en ce qu'il est prévu un second moteur (44) pour ouvrir et fermer les mâchoires de soudure transversale (3) et celles de tassement (7).

2. Machine pour fabriquer des sachets tubulaires suivant la revendication 1, caractérisée en ce que les mâchoires de tassement (7) sont munies chacune de plusieurs buses de sortie d'air (34), dirigées vers le haut sur les mâchoires de soudure transversale (3) et issues d'un canal longitudinal commun pour de l'air (36), raccordé à une source d'air comprimé.

3. Procédé pour la mise en oeuvre d'une machine pour fabriquer des sachets tubulaires, dans laquelle le tube (20) est déplacé vers le bas en continu, à une première vitesse, deux mâchoires de tassement (7) , pouvant coulisser l'une vers l'autre en étant solidaires en déplacement de mâchoires de soudure transversale (3), sont fermées, après avoir rempli le sachet (13) de produits, les mâchoires de tassement (7) fermées sont déplacées dans le sens du déplacement du tube, à une vitesse plus grande que la première vitesse, pour exécuter un mouvement de tassement et ensuite, pendant l'avance continue du tuyau (20), le soudage transversal du sachet (13) est effectué et le sachet soudé est immédiatement séparé, caractérisé en ce qu'il consiste à déplacer les mâchoires de soudure transversale (3) et les mâchoires de tassement (7) pendant le mouvement de tassement dans la direction d'avance du tube, rectilignement par un premier dispositif d'entraînement et à déplacer ensuite vers le bas les mâchoires de soudure transversale (3) et les mâchoires de tassement (7) à une vitesse moindre que la première vitesse et à fermer simultanément les mâchoires de soudure transversale (3) par un second dispositif d'entraînement (44), pour former un cordon transversal (17) et, après la séparation du sachet soudé (13), à ouvrir les mâchoires de tassement (3) et à les ramener à la position de départ a grande vitesse.

## Claims

1. Machine for making tubular bags with a stripping device for compressing the contents of the bag, with a longitudinal sealing device (6) and with two transverse sealing jaws (3) located opposite each other, for producing transverse seams (17, 21) in the bag, with stripping jaws (7), which are located below the transverse sealing jaws (3) and connected to move with the latter, the stripping jaws (7) projecting in the direction of the tube (20) with respect to the transverse sealing jaws (3) and being loaded respectively by a spring (30), drive means (42) being provided, which impart a downwards movement in the longitudinal direction of the tube (F) to the transverse sealing jaws (3) together with the stripping jaws (7), and control means being provided, which ensure that in a first stage of movement, the stripping jaws (7) compress the tube (20) laterally and in this condition carry out a stripping movement in the downwards direction relative to the bag (13) and in a subsequent second stage of the movement close the transverse sealing jaws (3) to produce a transverse seam (17), characterised in that drive members are provided, which drive the tube (20) continuously during the stripping movement and during sealing, that control means are provided for a first motor (42) co-operating with the transverse sealing jaws and stripping jaws (3, 7), which drives the transverse sealing jaws and stripping jaws (3, 7) in a straight line in the downwards direction, in the first stage of movement, at a speed increased with respect to the speed of the tube and in the second stage of movement drives them at a straight downward speed corresponding to the speed of the tube and then moves them back at increased speed into the initial position and that the second motor (44) is provided for opening and closing the transverse sealing and stripping jaws (3, 7).

2. Machine for making tubular bags according to Claim 1, characterised in that the stripping jaws (7) are each provided with several air outlet nozzles (34) directed upwards towards the transverse sealing jaws (3), which nozzles (34) begin at a common longitudinal air duct (36) connected to a source of compressed air.

3. Method for operating a machine for making tubular bags, in which the tube (20) is moved downwards continuously at a first speed, after the filling of the bag (13) with products, two stripping jaws (7) able to move towards each other and connected as regards movement to transverse sealing jaws (3), are closed, for carrying out a stripping movement, the closed stripping jaws (7) are moved in the direction of movement of the tube at a speed increased with respect to the first speed and then during the continuous feed of the tube (20), transverse sealing of the bag (13) takes place and then the sealed bag is separated, characterised in that during the stripping movement, the transverse sealing jaws and stripping jaws (3, 7) are moved in a straight line in the feed direction of the tube by a first drive and after this the transverse sealing jaws and stripping jaws (3, 7) are moved downwards at a speed reduced with respect to the first speed and at the same time the transverse sealing jaws (3) are closed by a second drive (44) to form a transverse seam (17) and after the separation of the sealed bag (13), the stripping jaws (3) are opened and moved back to the initial position at an increased speed.

Fig. 1

Fig. 2

Fig. 3

Fig. 4

**Fig. 5**

**Fig. 6**

EP 0 276 628 B1